# EUROPÄISCHE PATENTSCHRIFT

(11) **EP 2 480 030 B1**
(45) Veröffentlichungstag und Bekanntmachung des Hinweises auf die Patenterteilung: **02.04.2014**
(21) Anmeldenummer: 12002660.4
(22) Anmeldetag: 25.09.2008
(51) Int. Cl.: H04W 48/18

(54) **Verfahren zum Betrieb eines zellularen Mobilfunknetzes**
Method for operating a cellular mobile radio network
Procédé pour faire fonctionner un réseau de radiocommunication mobile cellulaire

(30) Priorität: 23.11.2007 DE 102007056787
(43) Veröffentlichungstag der Anmeldung: 25.07.2012
(62) Teilanmeldung aus: 08802635.6
(73) Patentinhaber: Deutsche Telekom AG, 53113 Bonn (DE)
(72) Erfinder: van Bussel, Han, 53229 Bonn (DE); Klatt, Axel, 50996 Köln (DE)
(74) Vertreter: Cohausz Hannig Borkowski Wißgott

(56) Entgegenhaltungen:
- WO-A-2007/009433
- US-A1- 2005 288 016
- "Digital cellular telecommunications system (Phase 2+); Radio subsystem link control (3GPP TS 45.008 version 7.9.0 Release 7); ETSI TS 145 008", ETSI STANDARDS, LIS, SOPHIA ANTIPOLIS CEDEX, FRANCE, Bd. 3-G1, Nr. V7.9.0, 1. Oktober 2007 (2007-10-01), XP014040326, ISSN: 0000-0001
- "Digital cellular telecommunications system (Phase 2+); Universal Mobile Telecommunications System (UMTS); Mobile radio interface Layer 3 specification; Core network protocols; Stage 3 (3GPP TS 24.008 version 7.9.0 Release 7); ETSI TS 124 008", ETSI STANDARDS, LIS, SOPHIA ANTIPOLIS CEDEX, FRANCE, Bd. 3-CN1, Nr. V7.9.0, 1. Oktober 2007 (2007-10-01), XP014039895, ISSN: 0000-0001

## Beschreibung

Die Erfindung betrifft ein Verfahren zum Betrieb eines ersten zellularen Mobilfunknetzes, insbesondere zum Betrieb von Zellen im Randbereich des ersten zellularen Mobilfunknetzes, das durch eine Kennung identifizierbar ist und einem Mobilfunkendgerät, zu dem über eine Basisstation des ersten Mobilfunknetzes eine Funkverbindung besteht, zumindest in Randbereichen des ersten Mobilfunknetzes die Kennung eines zweiten als äquivalent gekennzeichneten benachbarten Mobilfunknetzes übermittelt, wobei eine zumindest teilweise räumliche Überlagerung der Funkreichweiten der beiden Mobilfunknetze vorliegt, und durch das Mobilfunkendgerät die Funksignalstärken der momentan von dem Mobilfunkendgerät empfangbaren Mobilfunknetze an dem momentanen Standort des Mobilfunkendgerätes gemessen werden.

Die Erfindung betrifft insbesondere ein Verfahren zur Vermeidung von Versorgungslücken an Randbereichen (speziell an Ländergrenzen) eines zellularen Mobilfunksystems, beispielsweise nach GSM-, UMTS-, cdma2000-, E-UTRAN oder WiMAX, WiBro, UMB-Standard, welche nach dem heutigen Stand der Technik bei Verwendung von gleichen Frequenzen, beispielsweise an den Grenzen eines öffentlichen Mobilfunksystems (PLMN), an den jeweils gegenüberliegenden Seiten einer Landesgrenze entstehen würden, damit eine gegenseitige negative Beeinflussung aufgrund von Interferenz, speziell im Falle von Systemen nach den UMTS und E-UTRA Standards ("reuse-1 Systemen"), vermieden werden kann.

Von Seiten der deutschen Bundesnetzagentur für Elektrizität, Gas, Telekommunikation, Post und Eisenbahnen (BNetzA) beispielsweise wird für den Betrieb von UMTS-Netzen in Deutschland und den jeweiligen Nachbarländern eine Begrenzung des Empfangspegels entlang der Außengrenzen der Bundesrepublik Deutschland verlangt, die auf beiden Seiten der Grenze jeweils zu einem bis ca. 6 km breiten Gebiet führen würde, welches nicht mit UMTS versorgt werden kann. Eine entsprechende Forderung wird auch im europäischen Rahmen in Dokumenten des ERC (European Radiocomms Committee ERC TG1) gefunden.

Diese Empfehlung der ERC stellt es den Mobilfunknetzbetreibern auf beiden Seiten der Landesgrenze jedoch frei, entweder die max. Empfangspegel einzuhalten oder eine Interferenz zwischen benachbarten Mobilfunknetzen auf anderem Wege zuverlässig zu verhindern.

Im Rahmen der UMTS-Standardisierung wurde in 3GPP das Konzept der "equivalent PLMNs" eingeführt. Mit dessen Hilfe ist es möglich, einem Mobilfunkendgerät (UE) neben dem Mobilfunknetz (PLMN) mit dem es z. Zt. registriert ist, weitere PLMN-Kennungen als "äquivalente PLMNs" mitzuteilen [vgl. 3GPP TS 24.008]. Diese (zusätzlichen) PLMNs werden vom Mobilfunkendgerät (UE) für cell selection (Netz- bzw. Zellauswahl), cell reselection (erneuteZellenauswahl) und Handover (Weitergabe an eine andere (Nachbar-)Zelle) behandelt als würden sie zu dem registrierten PLMN gehören.

Das Konzept ist u.a. dafür zu verwenden, einen nahtlosen Übergang eines Mobilfunkendgerätes von einem PLMN in ein anderes zu unterstützen. Dafür werden den Endgeräten im Grenzbereich zusätzlich zu den Nachbarzellen des eigenen PLMN die Nachbarzellen eines "befreundeten" PLMNs, beispielsweise eines kooperierenden oder desselben Netzbetreibers, (zu dem eine unterbrechungsfreie Serviceverfügbarkeit sichergestellt werden soll) mitgeteilt und durch eine entsprechenden Signalisierung vom UE als äquivalent zu den Zellen des registrierten PLMNs betrachtet. Die Festlegung der äquivalenten PLMNs erfolgt auf Location/Routing Area (LA/RA) Basis und bei geeigneter Unterstützung durch das Netzwerk zusätzlich auch auf einer Subscriber-Basis.

Als Beispiel für ein erstes Inlandsnetz, z.B. Deutschland würden in den Zellen, d.h. in den Local Areas (LAs) im Grenzgebiet zum Ausland, z.B. Österreich, die Nachbarzellen von einem zweiten Auslandsnetz eines kooperierenden Betreibers (oder desselben Betreibers) zusätzlich zu den Zellen des ersten Inlandsnetzes als potentielle Kandidaten für einen Zellwechsel signalisiert werden. Nach Konfiguration "Auslandsnetz equivalent Inlandsnetz" würde für das Mobilfunkendgerät (User equipment = UE) der Übergang ("cell reselection") in das Nachbarnetz, d.h. das Auslandsnetz in Österreich, wie ein normaler Wechsel der Zelle (bzw. verschiedener LAs) innerhalb eines Netzes, d.h. innerhalb eines PLMNs aussehen und es würde nach dem Selektieren einer Zelle des Auslandsnetzes, d.h. des zweiten Mobilfunknetzes ein normales Location Area Update (LAU) durchführen und entsprechend mit dem Auslandsnetz registriert werden.

Der Wechsel in das Auslandsnetz erfolgt für ein Mobilfunkendgerät (UE) mit einer konfigurierten ePLMN-Liste (für welches also das zweite Mobilfunknetz, d.h hier das Auslandsnetz Österreich, äquivalent mit dem ersten Mobilfunknetz, Inlandsnetz Deutschland, gemacht wurde), in dem Moment wo eine Mobilfunkzelle des Auslandsnetzes (Österreich) eine bessere Radioqualität nach den von 3GPP vorgegebene Kriterien für Zellwechsel hat, als die aktuell genutzte Zelle des Inlandsnetzes (Deutschland). Ein Wechsel erfolgt somit in Abhängigkeit der Funksignalstärke (Netzintensität) am jeweiligen Standort des Mobilfunkendgerätes.

Dieses Prinzip stellt eine Art Grundprinzip für die Verschmelzung bzw. Zusammenlegung von Mobilfunknetzen mehrerer Anbieter bzw. grenz-übergreifend dar. Neben dem Einsatz von "equivalent PLMN" an Landesgrenzen kommt dieses Verfahren heute vorzugsweise auch im Rahmen von nationalen Korporationen mehrerer Mobilfunk-Netzbetreiber zur Anwendung ("National Roaming").

Ein ähnliches Verfahren kommt auch im Falle eines Handover, d.h. einer Weitergabe einer bestehenden Mobilfunkverbindung (also während der Mobilfunkteilnehmer beispielsweise ein Gespräch führt (CELL_DCH in UMTS, HSPA) zwischen diesen beiden Netzen in Frage. Nachbarzellen, die als zu einem äquivalenten PLMN gehörig signalisiert werden, würden in den vom Netz angeordneten Messungen (bspw. mittels "MEASUREMENT CONTROL" Nachricht) genau wie normale Zellen betrachtet und in Measurement Reports zum RNC (Radio Network Controller, eine Kontrolleinheit mehrerer Zellen des Mobilfunknetzes) zur Auswertung gemeldet (falls die entsprechenden Bedingungen erfüllt sind -> "measurement events").

Durch den Einsatz einer äquivalenten Kennung werden Nachbarzellen eines Fremdnetzes vom Mobilfunkendgerät folglich wie Zellen des Heimatnetzes verstanden und das Mobilfunkendgerät kann über diese Zellen telefonieren. Dies ist im Einzelfall jedoch nicht vorteilhaft. Befindet sich beispielsweise ein Mobilfunkendgerät in einem Fremdnetz und kehrt geographisch zurück in Richtung seines Heimatnetzes, so kann es dazu kommen, dass ihm an der Landesgrenze ein anderes Netz als sein Heimatnetz als äquivalent signalisiert wird. Dies bewirkt, dass sich das Mobilfunkendgerät in dieses äquivalente Netz anstelle seines Heimatnetzes einbucht, wodurch erhöhte Kosten für den Endgerätbenutzer entstehen.

Der ETSI-Standard TS 145 008, V.7.9.0, "Digital Cellular Telecommunications System (Phase 2+); Radio System Link Control (3GPP TS 45.008, Version 7.9.0 Release 7)", 1. Oktober 2007, offenbart ein Verfahren zum Betrieb eines zellularen Mobilfunknetzes.

Die der Erfindung zugrunde liegende Aufgabe ist es, ein Verfahren bereitzustellen, welches einerseits den genannten Nachteil überwindet und das andererseits ermöglicht, eine Versorgungslücke an den Landesgrenzen zwischen zwei PLMNs zu vermeiden und somit die Servicequalität für die Mobilfunk-Kunden bis an die Landesgrenze heran sicherzustellen, wobei eine derartige Methode negative Auswirkungen, hervorgerufen durch die jeweiligen Mobilfunknetze (PLMNs), sowie auch die negative Beeinflussung anderer Mobilfunknetze (PLMNs), ausschließen muss.

Diese Aufgabe wird erfindungsgemäß durch ein Verfahren gemäß Anspruch 1 gelöst.

Besonders vorteilhaft ist dabei, dass bei einem Verfahren zum Betrieb eines ersten zellularen Mobilfunknetzes, insbesondere zum Betrieb von Zellen im Randbereich des ersten zellularen Mobilfunknetzes, das erste Mobilfunknetz durch eine Kennung identifizierbar ist und einem Mobilfunkendgerät, zu dem eine Funkverbindung besteht, zumindest in Randbereichen des ersten Mobilfunknetzes die Kennung eines zweiten als äquivalent gekennzeichneten benachbarten Mobilfunknetzes übermittelt, wobei eine zumindest teilweise räumliche Überlagerung der Funkreichweiten der beiden Mobilfunknetze vorliegt, wobei durch das Mobilfunkendgerät die Funksignalstärken der momentan von dem Mobilfunkendgerät empfangbaren Mobilfunknetze an dem momentanen Standort des Mobilfunkendgerätes gemessen werden und eine Übergabe der Funkverbindung an das zweite benachbarte Mobilfunknetz erfolgt, wenn dessen Funksignalstärke einen festlegbaren Schwellwert überschreitet oder größer ist, als die Funksignalstärke des ersten Mobilfunknetzes, und wobei eine Überprüfung durch das zweite Mobilfunknetz erfolgt, ob für das Mobilfunkendgerät in dem zweiten Mobilfunknetzwerk eine Nutzungsberechtigung besteht, wobei bei bestehender Nutzungsberechtigung die Funkverbindung von dem zweiten Mobilfunknetz übernommen und aufrechterhalten wird, und die Übernahme der Funkverbindung von dem zweiten Mobilfunknetz abgelehnt wird, wenn eine Nutzungsberechtigung nicht besteht und wobei bei Ablehnung der Übernahme durch das zweite Mobilfunknetz eine entsprechende Meldung generiert und an das Mobilfunkendgerät übermittelt wird und bei Erhalt dieser Meldung eine Netzsuche des Mobilfunkengerätes ausgelöst wird.

Hierdurch ist es für ein benachbartes äquivalentes Mobilfunknetz möglich, ein Mobilfunkendgerät gezielt abzuweisen (LAU reject), wobei das Mobilfunkendgerät dann nach einem anderen, dritten Netz sucht. Bezüglich des vorgenannten Beispielfalls bedeutet dies, dass das Mobilfunkendgerät durch die Abweisung die Möglichkeit hat, in sein Heimatnetz zurückzukehren, so dass keine Roaminggebühren in dem äquivalenten zweiten Mobilfunknetz entstehen, in das sich das Mobilfunkendgerät durch den Einsatz der "äquivalenten PLMNs" möglicherweise eingebucht hatte. Ferner wird durch das Verfahren zur Vermeidung von Versorgungslücken einerseits oder beiderseits einer Landesgrenze die Kenntnis der besten Empfangseigenschaften dazu genutzt, den Übergang zwischen den jeweiligen Mobilfunknetzen (PLMNs) für ein Mobilfunkendgerät (UE), mittels Netzwerkkontrolle, gezielt zu verhindern oder zu gestatten, wodurch ein Mobilfunknetz derart ausgestaltet sein kann, dass bis zu einer Landesgrenze die benötigte Sendeleistung bereitgestellt wird, gleichzeitig aber Interferenzen zwischen den benachbarten Mobilfunknetzen vermieden werden.

Das Verfahren ermöglicht es gleichzeitig, das nicht versorgte Gebiet zu beiden Seiten der Grenze überflüssig zu machen und einen wesentlich besser bis an den Grenzbereich ausgedehnte Serviceverfügbarkeit für die Kunden der Mobilfunknetzbetreiber auf beiden Seiten der Grenze sicherzustellen. Besonders wichtig bzw. vorteilhaft ist der Einsatz dieses Verfahrens in Gebieten, die aufgrund ihrer Bevölkerungsdichte (Ballungsräume) mit einer ausreichenden Netzabdeckung, d.h. mit UMTS oder dgl. versorgt werden müssen (für die Bundesrepublik Deutschland sind dieses z.B. die Städte Aachen, Passau, Lindau, Frankfurt/O.), aber auch an Grenzübergängen von Autobahnen bzw. Flughäfen in Grenznähe (Kopenhagen, Genf), die mit höherer Wahrscheinlichkeit ebenfalls z.B. mit UMTS oder dgl. versorgt werden sollen und naturgemäß schnell Kapazitätsengpässe aufweisen. Eine grundsätzliche Anwendung des Verfahrens entlang der gesamten mit Mobilfunk versorgten Landesgrenzen ist möglich und sinnvoll. Weiterhin ist das erfindungsgemäße Verfahren nicht auf die Anwendung in Systemen nach UMTS-Standard beschränkt. Ein Einsatz dieses Verfahrens ist insbesondere auch bei einem Aufbau von neuartigen zellularen Mobilfunknetzen nach E-UTRAN Standards sinnvoll und vorteilhaft.

Weitere vorteilhafte Ausgestaltungen der Erfindung sind in den Unteransprüchen angegeben.

Erfindungsgemäß wird bei Ablehnung der Übernahme durch das zweite Mobilfunknetz eine entsprechende Meldung generiert und an das Mobilfunkendgerät übermittelt. D.h., dass einem Mobilfunkendgerät beim Übergang von einem ersten Netz (PLMN) in ein anderes Netz (PLMN), dieses andere PLMN als äquivalentes PLMN (ePLMN = equivalent PLMN) konfiguriert wurde, und beim Übergang in das andere PLMN, das durchzuführende Location/Routing/Tracking Area Update des Ziel-PLMNs verweigert wird, bspw. durch Antworten mit einer LAU/RAU/TAU Reject Nachricht.

Erfindungsgemäß wird weiterhin bei Ablehnung der Übernahme und/oder Erhalt einer entsprechenden Meldung eine Netzsuche des Mobilfunkengerätes ausgelöst.

Hierdurch wird bei einem Mobilfunkendgerät (UE) welches beim Übergang in eine Zelle des Nachbarnetz (Nachbar-PLMN) abgewiesen werden soll, dadurch, dass eine LAU/RAU/TAU Reject Nachricht gesandt wird, eine PLMN Selection, d.h. eine Netzsuche des UE veranlasst.

Vorzugsweise werden die von dem Mobilfunkendgerät (UE 1) gemessenen Funksignalstärken und die dazugehörigen Kennungen des jeweiligen Mobilfunknetzes (PLMN A, PLMN B) dem ersten Mobilfunknetz (PLMN A) zur Auswertung übermittelt.

Bevorzugt ist das erste Mobilfunknetz aus einer Vielzahl von Zellen gebildet, wobei jeweils eine bestimmte Anzahl von Zellen von einer übergeordneten Kontrolleinheit gesteuert wird und eine Auswertung der von dem Mobilfunkendgerät übermittelten Funksignalstärken und der zugehörigen Netzkennungen durch die Kontrolleinheit erfolgt. Eine alternative Ausgestaltung ermöglicht die Anwendung des Verfahrens in Zellen eines Mobilfunknetzes, wobei die eigentliche Kontrolle in der Basisstationseinheit durchgeführt wird.

Vorzugsweise ist das erste Mobilfunknetz aus einer Vielzahl von Zellen gebildet und es erfolgt eine Auswertung der von dem Mobilfunkendgerät übermittelten Funksignalstärken und der zugehörigen Netzkennungen durch die dezentrale Kontrolleinheit.

Des weiteren betrifft die Erfindung ein Computerprogrammprodukt umfassend ein auf einer Recheneinheit lauffähiges Computerprogramm, welches das erfindungsgemäße Verfahren nach einem der Ansprüche 1 bis 3 durchführt, wenn es auf einer Recheneinheit ausgeführt wird, insbesondere auf einer Recheneinheit einer Kontrolleinheit oder dergleichen eines Mobilfunknetzes, insbesondere einer Radionetzwerk-Kontrolleinheit (bspw. einem RNC oder einem eNB) oder einem Core Netzwerkknoten (bspw. einem SGSN oder einer MME).

Die Erfindung wird nachfolgend anhand von Figuren erläutert. Es zeigen:
- Fig. 1:: Eine schematische Darstellung der Interferenz zweier benachbarten Mobilfunknetze;
- Fig. 2:: den Verlauf der Funksignalstärke (Netzintensität) im Grenzbereich zwischen zwei benachbarten Mobilfunknetzen und den Bereich eines Gesprächsabbruchs ohne äquivalente Netze (PLMN); Gesprächsabbruch ohne equiv. PLMN (erst wenn Rx Level nicht mehr ausreichend)
- Fig. 3:: den Verlauf der Funksignalstärke (Netzintensität) im Grenzbereich zwischen zwei benachbarten Mobilfunknetzen und den Bereich ohne Versorgung bei Einhaltung des Mindestabstandes zur Grenze; Gesprächsabbruch wenn max. erlaubte Feldstärke eingehalten wird (Pegelabsenkung gem. ERC TG1 Empfehlung)
- Fig. 4:: den Verlauf der Funksignalstärke (Netzintensität) im Grenzbereich zwischen zwei benachbarten Mobilfunknetzen und den Bereich eines Gesprächsabbruchs bei Nutzung äquivalenter Netze (ePLMN); Gesprächsabbruch mit Konfiguration von equivalenten PLMNs (forcierter Abbruch durch LAU reject oder Abbruch durch Netzwerk (RNC, eNB, etc.))

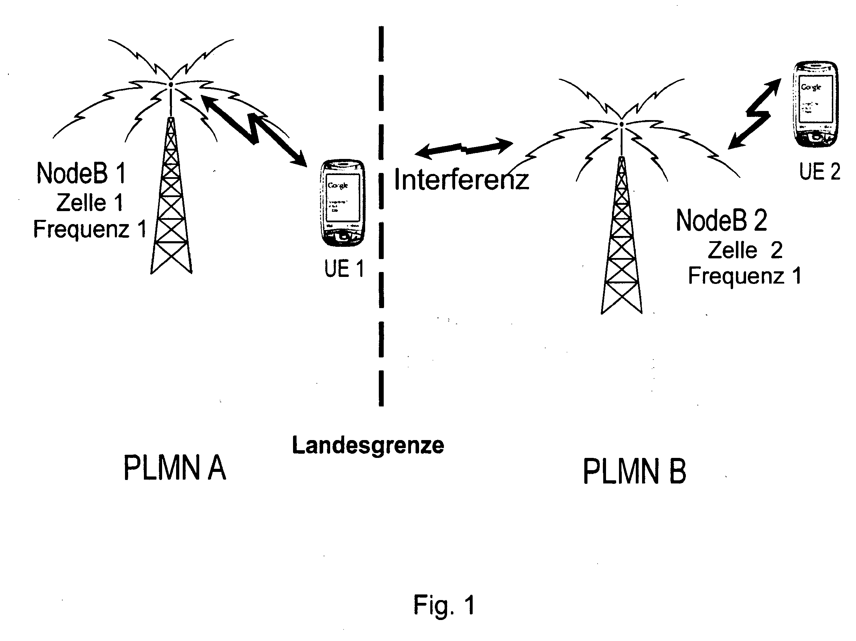

In Figur 1 dargestellt ist die grundsätzliche Problematik im Grenzbereich zwischen zwei benachbarten Mobilfunknetzen (PLMNs), wobei bei Nutzung derselben Frequenz "1" beider Netze zu jeweils einem Mobilfunkendgerät, UE1 im ersten Netz und UE2 im zweiten Netz, Interferenzen auftreten können.

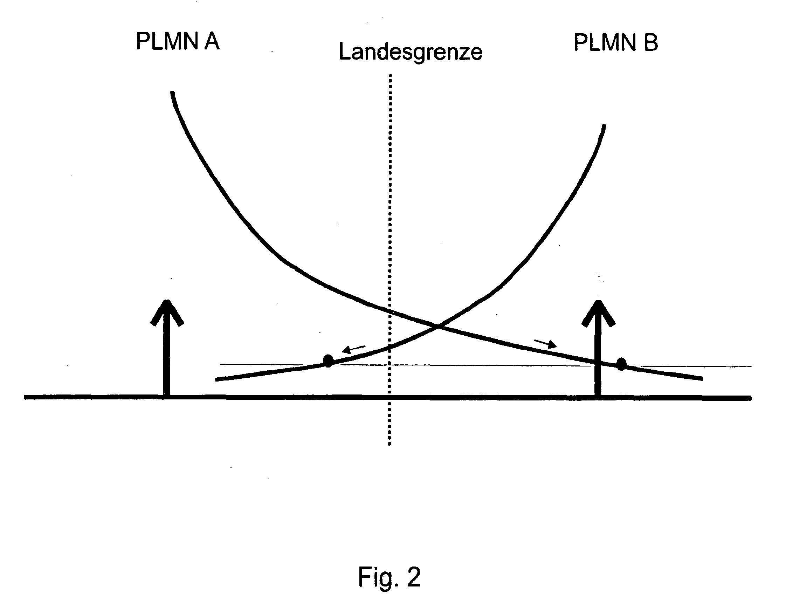

Legt man die Netze so aus, dass eine Netzabdeckung, d.h. eine ausreichende Funksignalstärke bis an die Grenze, z.B. Landesgrenze, gegeben sein soll, so können ohne die Nutzung des Prinzips der äquivalenten Netze (ePLMN), wie in Figur 2 dargestellt, Interferenzen auftreten und ein Gesprächsabbruch erfolgt erst hinter der Grenze, wenn die Funksignalstärke (Netzintensität) zu schwach wird und bereits Interferenzen gegen das Nachbarnetz kreiert werden.

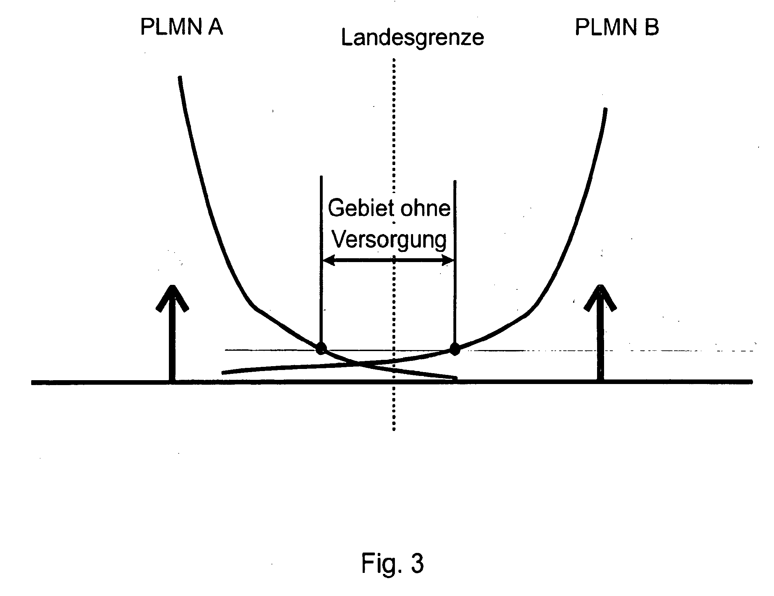

Alternativ hierzu können zur Vermeidung von Interferenzen im Grenzbereich zwischen zwei benachbarten Mobilfunknetzen die Sendeleistungen respektive die Konfigurationen der Zellen im Grenzbereich wie in Figur 3 dargestellt gewählt werden, d.h. dass beidseitig ein entsprechender Abstand zur Grenze eingehalten wird, mit der Folge eines sehr breiten Streifen entlang der Grenze ohne Funknetzversorgung.

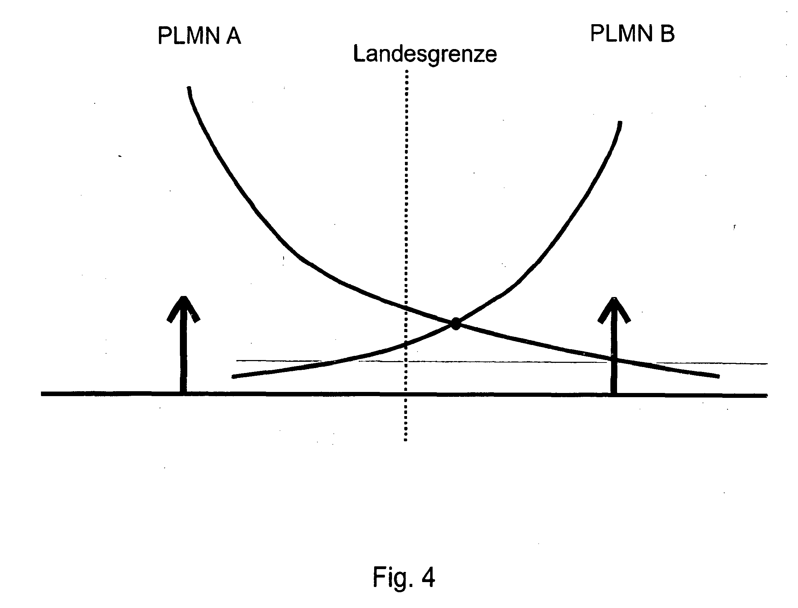

Um die negativen Auswirkungen der Grenzkoordinierung/Nichtversorgung, wie sie von der BNetzA bzw. von dem ERC vorgesehen sind (bis ca. 12 km Streifen ohne UMTS-Versorgung entlang der Landesgrenze) zu vermeiden, kann das Konzept der äquivalenten PLMNs (ePLMN - equivalent Public Land Mobile Network) ebenfalls eingesetzt und nach dem erfindungsgemäßen Verfahren erweitert werden. Hierzu ist jedoch eine Koordinierung der Netzbetreiber beiderseits der Grenze notwendig, auch wenn ein gegenseitiges Handover (Verbindungsübergabe) ggf. aus kommerziellen, regulatorischen oder strategischen Gründen nicht erwünscht oder nicht zulässig ist. Der intelligente Einsatz des äquivalenten PLMN-Konzepts ermöglicht jedoch eine Versorgung durch UMTS oder dgl. bis an die Landesgrenze und den definierten Abbruch einer Verbindung, damit eine Störung (Interferenz) des benachbarten Betreibers durch (Uplink-) Interferenz des UE vermieden wird, wie dies in Figur 4 dargstellt ist.

Im Bereich der (Landes-) Grenzen werden die Zellen des auf der gegenüberliegenden Seite operierenden Netzbetreibers gegenseitig auf den

System Information Blocks (SIB) des Broadcast Channels (BCCH) ausgestrahlt und die PLMN-Identities beider Netzbetreiber in den Location Areas (LA) entlang der Grenze dem Endgerät als äquivalente PLMNs (ePLMN) mitgeteilt.

Im Falle der Kooperation zweier Mobilfunknetzbetreiber beiderseits der Grenze bedarf es der Konfiguration der notwendigen Informationen des ePLMN und der Eintragung der jeweiligen Nachbarschaftsbeziehungen (Nachbarzellen), um bei Überschreitung der Grenze die bestehende Mobilfunkverbindung an das benachbarte Mobilfunknetz zu übergeben (Handover), wie dies im obigen Beispiel zwischen einem ersten deutschen Netz und einem zweiten österreichischen Netz dargestellt ist.

Da aber ein gezieltes Zusammenarbeiten der Netzbetreiber beiderseits der Grenze nicht immer gewünscht ist, schlägt das erfindungsgemäße Verfahren vor, dass auch im Falle des nicht gewünschten Übergangs in das entsprechende Netz des Mobilfunkbetreibers auf der anderen Seite der Grenze diese Netze den Mobilfunkendgeräten signalisiert werden und das nachfolgende Location Area Update (LAU) abgewiesen wird, sobald sich das Mobilfunkendgerät (UE) auf der nach den von 3GPP vorgegebenen Kriterien funktechnisch besseren Zelle jenseits der Grenze befindet. Durch die Anwendung dieses Verfahrens wird der Nichtversorgungs-Bereich unnötig, da sich ein UE bis zum Erreichen der Grenze (basierend auf Planungsvorgaben und Netzparametrisierung) auf der Zelle des ursprünglichen PLMN befindet und mit dem Wechsel über die Grenze auf die funktechnisch beste Zelle des Nachbarlandes wechselt (Figur 4) und dann durch eine Abweisung (durch einen "LAU reject") der Zugang zu dem neuen Netz verwehrt wird. Erweiternd erzwingt ein entsprechender "cause value" des "LAU reject" schließlich eine Auswahl eines anderen PLMNs (des Nachbarlandes) um dem Benutzer nach dem Wechsel in das andere Land einen Dienst zu Verfügung stellen zu können.

Ein Anwendungs-Beispiel zur Anwendung des erfindungsgemäßen Verfahrens ist ein Benutzer eines Mobilfunkbetreibers A-Deutschland (HPLMN), der in den Niederlanden das Netz von Betreiber B-Netherlands (VPLMN) genutzt hat und sich geografisch in Richtung der Grenze Deutschlands bewegt: Dieser wird durch die Zuweisung
<**B**-Netherlands äquivalent **B**-Deutschland>
an der Grenze in die funktechnisch beste Zelle wechseln (von Betreiber **B-**Deutschland) dort aber, da er typischerweise (mit Ausnahme National Roaming) keinen Zugang in das Netz von Betreiber **B**-Deutschland hat, durch einen "LAU reject" abgelehnt, und kann damit keine zusätzlich Interferenz gegen das Netz von Betreiber **B**-Deutschland generieren. Die verursachte Interferenz ist nicht höher als der Normalfall, wenn eine Zelle vom eigenen Netz Nachbarzelle wäre. Über die optionale Anwendung der von 3GPP spezifizierte PLMN Selection (nach einem entsprechenden "LAU reject cause" [3GPP TS 24.008]) wird das Mobilfunkendgerät (UE) in sein Heimatnetz, z.B. das Netz **A**-Deutschland von Betreiber A geschickt.

Dieses Beispiel zeigt, dass durch die Anwendung des erfindungsgemäßen Verfahrens ein "sanfter" Übergang zwischen des PLMNs verschiedener Länder möglich ist, der Bereich der Nichtversorgung zur Vermeidung von Interferenz vermieden werden kann und zudem eine gezielte Steuerung des Zugangs/Nichtzugangs zu den jeweiligen PLMNs realisiert werden kann.

Generell lässt sich eine Ausprägung des erfindungsgemäßen Verfahrens besonders vorteilhaft auch für den Fall eines aktiven Gesprächs während des Übergangs zwischen zwei PLMNs/Ländern einsetzen:
Durch die Konfiguration der jeweiligen Nachbarzellen beiderseits der Grenze und ggf. zusätzlicher Zuweisung, dass beide PLMNs äquivalent sind, werden während eines Gespräches (CELL_DCH in UMTS) die Zellen des jeweils anderen Betreibers ebenfalls durch das Mobilfunkendgerät (UE) ausgewertet und die Messergebnisse dem Serving RNC (SRNC) des jeweils versorgenden Netzes mitgeteilt.

Zur Vermeidung der Interferenz beim Übergang zwischen den PLMNs ist im RNC (Radio Network Controller = Kontrolleinheit) oder eNB (im Fall von E-UTRAN) ein Algorithmus gem. dem erfindungsgemäßen Verfahren zu implementieren, welcher die Zellen (Cell Identities) des jeweils anderen Betreibers kennt, für diese Messungen durch das Mobilfunkendgerät (UE) konfiguriert und eintreffende Messergebnisses des UEs auswertet, wann eine Zelle, die nicht zum eigenen PLMN gehört, eine bessere (Funk-)Qualität hat als die stärkste eigene Zelle. Sobald eine Zelle des Nachbarnetzes (PLMN) einen höheren Pegel/Funkqualität besitzt als die stärkste Zelle des eigenen Netzes, d.h. also immer dann wenn normalerweise ein Handover (Übergabe) stattfinden würde, entscheidet der SRNC oder der serving eNB, dass das Gespräch zu unterbrechen ist (beispielsweise durch Senden einer RRC CONNECTION RELEASE Nachricht in UMTS-Systemen). Hierdurch wird das Gespräch aktiv unterbrochen noch bevor es zu einer erhöhten Interferenz auf die Zellen des Nachbarlandes kommen kann, eine Versorgung jedoch bis and die Landesgrenze hin sichergestellt ist.

Alternativ kann natürlich, wie im Falle eine "befreundeten" PLMNs üblich, ein Handover in das Netz des Nachbarlandes erfolgen (ggf. auch auf eine andere Frequenz).

Die Anwendung dieses Verfahrens ist nicht auf eine Anwendung in UMTS mit dedizierten Kanälen (R'99 DCHs) beschränkt, sondern kann entsprechend bei Netzkontrolle der Terminal-Mobilität auch von HSPA oder E-UTRAN Netzen ausgeführt werden. Die Anwendung des erfindungsgemäßen Verfahrens ist nicht auf die oben genannten Beispiele beschränkt, sondern prinzipiell mit allen zellularen Mobilunksystem gleich welchem Standards durchführbar.

Das Verfahren ist in Figur 4 illustriert: Ein Mobilfunkendgerät, UE, welches sich von einem ersten Mobilfunknetz PLMN A in Richtung eines zweiten Mobilfunknetzes PLMN B (also von links nach rechts) bewegt, soll an der Stelle das Gespräch verlieren, an der die Zelle des PLMN B stärker wird als die (serving) Zelle des PLMN A. Normalerweise würde eine Unterbrechung des Gesprächs erst beim Erreichen des minimalen Empfangspegels (dünne schwarze Linie) jenseits der Landesgrenze erfolgen (dargestellt in Figur 4).

Hier wäre aber die auftretende Interferenz für das PLMN B durch das UE, welches noch mit dem NodeB (Basisstation) des PLMN A in Verbindung steht, so groß, dass es zu einer erheblichen Störung dieser Zelle kommen würde (vgl. Figur 1). Dieses Problem ("near-far problem") ist besonders bei CDMA-Netzen (z.B. UMTS) oder generell bei "reuse-1 Funksystemen" wie auch E-UTRAN von großer Bedeutung, da durch die Interferenz die Qualität sämtlicher Verbindungen in der gestörten Zelle des PLMN B sinken würde.

Das Erfindungsgemäße Verfahren muss nicht zwangsläufig auf beiden Seiten der Grenze (also in beiden PLMNs) implementiert werden. Als Konsequenz könnte das PLMN, welches dieses Verfahren nicht implementiert, seine eigene Versorgung aber nicht wie oben beschrieben erweitern, sondern müsste einseitig die Pegelabsenkung wie in [ERC REC 01-01] beschrieben absenken, um eine Störung anderer Mobilfunksysteme zu vermeiden.

## Patentansprüche

1. Verfahren zum Betrieb eines ersten zellularen Mobilfunknetzes (PLMN A), das durch eine Kennung identifizierbar ist und einem Mobilfunkendgerät (UE 1), zu dem über eine Basisstation (NodeB 1) des ersten Mobilfunknetzes (PLMN A) eine Funkverbindung besteht, zumindest im Grenzgebiet an einer Landesgrenze zu einem benachbarten zweiten Mobilfunknetz (PLMN B) des Nachbarlandes die Kennung dieses zweiten, als äquivalent gekennzeichneten Mobilfunknetzes (PLMN B) übermittelt, wobei eine räumliche Überlagerung der Funkreichweiten der beiden Mobilfunknetze (PLMN A, PLMN B) an der Landesgrenze vorliegt und die Mobilfunknetze (PLMN A, PLMN B) dieselbe Frequenz benutzen, wobei durch das Mobilfunkendgerät (UE 1) die Funksignalstärken von Basisstationen (NodeB 1, NodeB 2) der momentan von dem Mobilfunkendgerät (UE 1) empfangbaren Mobilfunknetze (PLMN A, PLMN B) an dem momentanen Standort des Mobilfunkendgerätes (UE 1) gemessen werden, und eine Übergabe der Funkverbindung an das zweite benachbarte Mobilfunknetz (PLMN B) erfolgt, wenn die gemessene Funksignalstärke einer Basisstation (NodeB 2) des zweiten Mobilfunknetzes (PLMN B) einen festlegbaren Schwellwert überschreitet oder größer ist, als die gemessene Funksignalstärke der Basisstation (NodeB 1) des ersten Mobilfunknetzes (PLMN A), wobei eine Überprüfung durch das zweite Mobilfunknetz (PLMN B) erfolgt, ob für das Mobilfunkendgerät (UE 1) in dem zweiten Mobilfunknetz (PLMN B) eine Nutzungsberechtigung besteht, wobei bei bestehender Nutzungsberechtigung die Funkverbindung von dem zweiten Mobilfunknetz (PLMN B) übernommen und aufrechterhalten wird und die Übernahme der Funkverbindung von dem zweiten Mobilfunknetz (PLMN B) abgelehnt wird, wenn eine Nutzungsberechtigung nicht besteht, und wobei bei Ablehnung der Übernahme durch das zweite Mobilfunknetz (PLMN B) eine entsprechende Meldung generiert und an das Mobilfunkendgerät (UE 1) übermittelt wird und bei Erhalt dieser Meldung eine Netzsuche des Mobilfunkengerätes (UE 1) ausgelöst wird.

2. Verfahren nach Anspruch 1, **dadurch gekennzeichnet, dass** die von dem Mobilfunkendgerät (UE 1) gemessenen Funksignalstärken und die dazugehörigen Kennungen des jeweiligen Mobilfunknetzes (PLMN A, PLMN B) dem ersten Mobilfunknetz (PLMN A) zur Auswertung übermittelt werden.

3. Verfahren nach Anspruch 2, **dadurch gekennzeichnet, dass** das erste Mobilfunknetz (PLMN A) aus einer Vielzahl von Zellen gebildet ist, wobei jeweils eine bestimmte Anzahl von Zellen von einer übergeordneten Kontrolleinheit gesteuert wird und eine Auswertung der von dem Mobilfunkendgerät (UE 1) übermittelten Funksignalstärken und der zugehörigen Netzkennungen durch die Kontrolleinheit erfolgt.

4. Computerprogrammprodukt umfassend ein auf einer Recheneinheit lauffähiges Computerprogramm, welches das Verfahren nach einem der vorherigen Ansprüche durchführt, wenn es auf einer Recheneinheit ausgeführt wird, insbesondere auf einer Recheneinheit einer Kontrolleinheit eines Mobilfunknetzes (PLMN B).

## Claims

1. Method for the operation of a first cellular mobile radio network (PLMN A) which can be identified by an identifier and, at least in the border area at a national border for an adjacent second mobile radio network (PLMN B) in the neighbouring country, transmits the identifier of this second mobile radio network (PLMN B), which is denoted as equivalent, to a mobile radio terminal (UE 1) to which there is a radio link via a base station (NodeB 1) of the first mobile radio network (PLMN A), wherein there is a physical overlap in the radio ranges of the two mobile radio networks (PLMN A, PLMN B) at the national border and the mobile radio networks (PLMN A, PLMN B) use the same frequency, wherein the mobile radio terminal (UE 1) measures the radio signal strengths of base stations (NodeB 1, NodeB 2) in the mobile radio networks (PLMN A, PLMN B) which can currently be received by the mobile radio terminal (UE 1) at the current location of the mobile radio terminal (UE 1), and the radio link is transferred to the second adjacent mobile radio network (PLMN B) when the measured radio signal strength of a base station (NodeB 2) in the second mobile radio network (PLMN B) exceeds a stipulatable threshold value or is greater than the measured radio signal strength of the base station (NodeB 1) in the first mobile radio network (PLMN A), wherein a check is performed by the second mobile radio network (PLMN B) to determine whether use authorization exists for the mobile radio terminal (UE 1) in the second mobile radio network (PLMN B), wherein existing use authorization prompts the radio link to be adopted and maintained by the second mobile radio network (PLMN B) and adoption of the radio link is rejected by the second mobile radio network (PLMN B) if use authorization does not exist, and wherein if the adoption is rejected then the second mobile radio network (PLMN B) generates a corresponding message and transmits it to the mobile radio terminal (UE 1), and receipt of this message prompts the initiation of a network search on the mobile radio terminal (UE 1).

2. Method according to Claim 1, **characterized in that** the radio signal strengths measured by the mobile radio terminal (UE 1) and the associated identifiers of the respective mobile radio network (PLMN A, PLMN B) are transmitted to the first mobile radio network (PLMN A) for evaluation.

3. Method according to Claim 2, **characterized in that** the first mobile radio network (PLMN A) is formed from a multiplicity of cells, wherein a respective particular number of cells are controlled by a superordinate control unit, and evaluation of the radio signal strengths transmitted by the mobile radio terminal (UE 1) and of the associated network identifiers is effected by the control unit.

4. Computer program product comprising a computer program which is executable on a computation unit and which performs the method according to one of the preceding claims when it is executed on the computation unit, particularly on a computation unit in a control unit in a mobile radio network (PLMN B).

## Revendications

1. Procédé de mise en fonctionnement d'un premier réseau de radiocommunication mobile cellulaire (PLMN A) qui peut être identifié par un identificateur et communique à un terminal de radiocommunication mobile (UE 1), avec lequel une liaison de radiocommunication est établie par l'intermédiaire d'une station de base (NoeudB 1) du premier réseau de radiocommunication mobile (PLMN A), au moins dans la zone adjacente à une frontière d'un second réseau de radiocommunication mobile voisin (PLMN B) du pays voisin, la reconnaissance de ce second réseau de radiocommunication mobile (PLMN B) caractérisé comme étant équivalent, une superposition spatiale des portées radio des deux réseaux de radiocommunication mobiles (PLMN A, PLMN B) ayant lieu à la zone frontalière et les réseaux de radiocommunication mobiles (PLMN A, PLMN B) utilisant la même fréquence, les intensités des signaux radio des stations de base (NoeudB 1, NoeudB 2) des réseaux de radiocommunication mobiles (PLMN A, PLMN B) pouvant être reçus à l'instant présent par le terminal de radiocommunication mobile (UE 1) étant mesurées par le terminal de radiocommunication mobile (UE 1) à l'instant présent à l'emplacement du terminal de radiocommunication mobile (UE 1) et un transfert de la liaison radio étant effectué au second réseau de radiocommunication mobile voisin (PLMN B) lorsque l'intensité des signaux radio mesurée d'une station de base (NoeudB 2) du second réseau de radiocommunication mobile (PLMN B) dépasse ou est supérieure à un seuil réglable en tant qu'intensité de signal radio mesurée de la station de base (NoeudB 1) du premier réseau de radiocommunication mobile (PLMN A), un contrôle ayant lieu par le second réseau de radiocommunication mobile (PLMN B), pour établir s'il existe une autorisation d'utilisation pour le terminal de radiocommunication mobile (UE 1) dans le second réseau de radiocommunication mobile (PLMN B), et s'il existe une autorisation d'utilisation, la liaison de radiocommunication étant reprise par le second réseau de radiocommunication mobile (PLMN B) et étant maintenue, et la reprise de la liaison de radiocommunication par le second réseau de radiocommunication mobile (PLMN B) étant refusée lorsqu'il n'existe pas d'autorisation d'utilisation, et lors d'un refus de reprise par le second réseau de radiocommunication mobile (PLMN B), un message correspondant étant généré et communiqué au terminal de radiocommunication mobile (UE 1), et à la réception de ce message, une recherche de réseau du terminal de radiocommunication mobile (UE 1) étant déclenchée.

2. Procédé selon la revendication 1, **caractérisé en ce que** les intensités des signaux radio mesurées par le terminal de radiocommunication mobile (UE 1) et les reconnaissances associées du réseau de radiocommunication mobile respectif (PLMN A, PLMN B) sont communiquées au premier réseau de radiocommunication mobile (PLMN A) en vue d'une analyse.

3. Procédé selon la revendication 2, **caractérisé en ce que** le premier réseau de radiocommunication mobile (PLMN A) est constitué d'une pluralité de cellules, un nombre déterminé respectif de cellules étant commandé par une unité de commande de niveau supérieur et une évaluation des intensités des signaux radio transmises par le terminal de radiocommunication mobile (UE 1) et des identificateurs de réseau associés étant effectuée par l'unité de commande.

4. Produit de programme informatique comprenant un programme informatique exécutable sur une unité informatique mettant en oeuvre le procédé selon l'une quelconque des revendications précédentes lorsqu'il est exécuté sur une unité informatique, notamment sur une unité informatique d'une unité de commande d'un réseau de radiocommunication mobile (PLMN B).
